# EUROPEAN PATENT SPECIFICATION

(11) **EP 3 103 580 B1**
(45) Date of publication and mention of the grant of the patent: **20.01.2021**
(21) Application number: 15171891.3
(22) Date of filing: 12.06.2015
(51) Int. Cl.: B23P 15/04, F01D 5/28, F01D 9/04, F01D 9/06, F01D 5/18

(54) **METHOD FOR MANUFACTURING A BLADING MEMBER ASSEMBLY**
VERFAHREN ZUR HERSTELLUNG EINER BESCHAUFELUNGSELEMENTANORDNUNG
PROCEDE DE FABRICATION D'UN ENSEMBLE D'ELEMENTS D'AUBAGE

(43) Date of publication of application: 14.12.2016
(73) Proprietor: Ansaldo Energia IP UK Limited, London W1G 9DQ (GB)
(72) Inventor: Brandl, Herbert, 79761 Waldshut-Tiengen (DE); Benz, Eribert, 5413 Birmenstorf (CH); Koehnke, Rene, 8166 Niederweningen (CH); Paralikas, Ioannis, 5408 Ennetbaden (CH)
(74) Representative: Bernotti, Andrea

(56) References cited:
- EP-A2- 1 176 284
- EP-A2- 2 540 962
- WO-A1-2013/167312
- WO-A1-2014/016149
- US-A- 5 797 725

## Description

### TECHNICAL FIELD

The present disclosure relates to a method for manufacturing a blading member assembly as per the preamble of claim 1. An example of such a method is disclosed by WO 2014/016149 A.

### BACKGROUND OF THE DISCLOSURE

Blading members for fluid flow machines may require extensive processing after blading member blanks have been obtained, e.g. by casting, selective laser melting, selective electron beam melting or any other suitable method. In particular in gas turbines, blades may be exposed to a challenging environment, comprising gases at elevated temperatures which may even exceed the melting temperature of the material applied, and aggressive hot combustion gases. It is thus known to apply protective and/or thermal barrier coatings to blading members. It is further known to provide cooling holes, or, more generally spoken, cooling openings in blading members such as to apply for instance film cooling and/or effusion cooling. Several processing steps may thus be required after having received a blank in order to manufacture a blading member suited for the use in a fluid flow machine, and in particular for use in the hot gas path of the expansion turbine of a gas turbine engine. Said steps may comprise, but are not limited to, applying coatings and/or manufacturing cooling holes by machining.

Blading members comprising platforms and airfoils may comprise comparatively sharp edges or fillets in a transition area between an airfoil and a platform. Those may impede the tooling access for processing at the required locations and/or at the required angles, in particular in further consideration of the size of the tools applied. This problem gets even more aggravated if a blading member comprises, for instance, two platforms, or, a platform and a shroud, respectively. There are also severe constraints in the case of blading multiples, where a multitude of airfoils are present on a platform or extend between two platforms, or, a platform and a shroud, respectively. It may be said that dead angles for tooling access and/or, more generally, for manufacturing are present.

Restrictions thus apply for instance to the arrangement of cooling holes in blading members as mentioned above, and moreover the geometry of e.g. the outlet apertures of said cooling holes, which often are desired to form comparatively complex diffuser-like geometries. In particular, it is, according to the art, not possible to manufacture e.g. cooling holes in a manner where a tool applied for manufacturing would interfere with segments of the blading member. That means, in other words, if, for instance, a cooling hole of an airfoil is intended to be arranged such that its extension on the exterior of the airfoil would intersect a platform or another airfoil, such a cooling hole is impossible to be manufactured e.g. by drilling, or it may, if at all, only be possible with specifically designed complex and expensive tools and methods.

Also, when applying coatings to the blading member, it may be found challenging if not impossible to reliably and controllably apply coatings to such dead angles. In particular, the need to coat a platform and an airfoil at the same time may result in overspraying in fillets, in turn resulting in poor coating quality. Control of the coating process and of the quality of the resulting coating layers may thus be significantly impaired.

WO2014/016149 discloses a method for producing a turbine vane with a vane airfoil and a vane root, which are produced as separate parts; a cooling air opening is realized into the vane airfoil; and then the vane airfoil and vane root are joined together.

### LINEOUT OF THE SUBJECT MATTER OF THE PRESENT DISCLOSURE

It is an object of the present disclosure to provide a method for manufacturing a blading member, and a blading member achieved by said method. It is a more specific object to provide a method for manufacturing a blading member for a fluid flow machine which facilitates tooling access to the hot gas side of the blading member during manufacturing. In a further aspect, it is an object of the present disclosure to provide a method having less restrictions as to the possible positions and orientations of cooling openings, or the trajectories of coolant beams discharges from said cooling openings, respectively. In still a further aspect, a method shall be disclosed which enables improved process control and improved quality for coatings to be applied to the blading member.

This is achieved by the subject matter described in claim 1.

Further effects and advantages of the disclosed subject matter, whether explicitly mentioned or not, will become apparent in view of the disclosure provided below.

For instance, US 2009/0196761 discloses providing airfoil members and platform members as individual members, and joining them in order to provide a blading member assembly. US 2009/0196761 proposes to interlock the airfoil member and the platform member by a method referred to as injection molding.

Further methods and devices applicable to interlock airfoil and platform members and which may be applied in interlocking the assembly are known in the art. For instance, EP 1 176 284 proposes joining airfoils and platforms by brazing.

US 5,797,725 discloses blading members wherein each of the airfoil member and the platform member comprise a corresponding flute which are filled by a common retainer. In a preferred embodiment the retainer is manufactured inside the flutes by casting, and in particular by a process referred to a bi-casting.

US 7,686,571 and US 7,704,044 propose coupling airfoil and platform members applying a mechanical interlock element, wherein said mechanical interlock element is slideably received inside flutes provided in the platform member and along the pressure or suction side of the airfoil member.

According to the teaching of US 2012/0009071, airfoil and platform members are joined and locked to each other in inserting a flexible wire into corresponding recesses of the members to be interlocked.

Moreover, European patent application 14 199 453.3, discloses a blading member and a method for assembling and joining the blading member, wherein mechanical interlock members are provided in order to virtually generate an undercut by which the airfoil member and the platform member are interlocked.

It is understood that the above methods are cited for reference only, and further methods for interlocking the blading member assembly presently known in the art or being disclosed in the future, may readily be applied in connection with the method as herein disclosed.

As is apparent, by the nature of the present disclosure as well as by reference to the above-cited documents, in applying the method as herein disclosed it is possible to provide individual blanks in which no undercuts or concave corners are present which restrict access at least to a surface of a respective blank which is intended, and configured and arranged, to be disposed on a surface of the assembly which is intended to constitute a hot gas side and be exposed to a hot fluid flow when operated in a fluid flow machine. As for such blanks, not having critical undercuts or corners, reference may again be made to US 2009/0196761. In particular, it will be understood that the hot fluid flow is a working gas flow and is clearly defined over a coolant flow which may also be present and may also exhibit elevated temperatures of up to 500°C and in excess thereof. The skilled person will readily understand that generally the hot gas side in such an instance will be made up by surfaces of the blading member which are subject to be exposed to the relatively hotter fluid flow. For instance, in an airfoil member the exterior surface of the airfoil will constitute the hot gas side. In a platform member, a surface which is intended to face the airfoil will constitute the hot gas side.

It will be appreciated that in processing a respective blank, and in further providing the blank without undercuts, fillets and other concave edges on a hot gas side of the blank, there is no or significantly less restriction to tool access for processing the component, and thus virtually unrestricted access to the hot gas side of the blanks is provided. Significantly less restrictions for processing a blank with access from the hot gas side are thus present.

A further advantage of the method may be seen in the fact that the individual components to be processed are smaller and lighter. Thus, handling of the components for processing may become largely facilitated. For instance, precise placement and clamping of a component will be largely facilitated. The components may be processed in smaller processing chambers, such as e.g. a processing chamber of a machine tool or a processing chamber applied for coating. As less interference between the workpiece and the tool is possible, processing can be carried out faster. In ; the coating step, a processing chamber of a given size may be loaded with more workpieces at once. Further beneficial effects of the method, and in particular of providing smaller and lighter workpieces, are also apparent, while naming them all would go far beyond the scope of the present disclosure.

In certain embodiments of the method as disclosed herein, processing a blank comprises applying at least one machining step. Machining is not to be construed as being limited to applying a mechanical chip removing method. Machining, to this extent, may comprise, but not be limited to, mechanical chip removing methods, electrochemical methods, electrochemical methods, like for instance eroding, removing material by melting as for instance in applying laser based machining methods, ablation of material, just to name a few. Machining may for instance comprise drilling, and may in particular comprise drilling coolant ducts for a cooling opening. Again, drilling in this context is not limited to applying a mechanical drill, but may also refer to applying any of the methods mentioned above, like e.g. erosion drilling, laser drilling or ablation drilling. Further, machining in the method as disclosed herein may comprise machining an outlet aperture of at least one cooling opening. It will be appreciated that cooling opening design and manufacturing, in applying the method, will not be compromised by restrictions due to restricted tooling access to a cooling opening location. In turn, coolant consumption may be reduced and overall engine efficiency may be enhanced, while, due to uncompromised and improved cooling, component lifetime may be improved.

It is understood, in this respect, that the term cooling opening as used herein widely covers a broad range of shapes and geometries. A cooling hole or opening may be broadly read as any duct penetrating a wall, thus providing a fluid connection between two sides of a wall, and intended for guiding a coolant therethrough, and it may exhibit any geometry in its longitudinal or cross section.

In a further aspect, a blank may comprise an interface section which is configured and adapted to mate with an interface section of a further member when assembled. The method may then comprise machining the interface section, for instance to achieve an appropriate fit of the interface sections. To this extent, the method may more specifically comprises applying a milling step to the interface section, and/or may further comprise applying a grinding step to the interface section.

The method is characterized in that processing a blank comprises applying at least one coating step to the blank. This may comprise, in particular, applying at least one of a protective coating and/or a thermal barrier coating. As no undercuts, corners, fillets or other dead angles are present while applying a coating step, an even coating layer may be applied as required. Generally, dead angles which may not be readily accessible in applying for instance spray coating, and which may result in locally insufficient coating, are avoided. On the other hand, excessive coating layer thickness which may occur due to overspraying, that is, multiple coating passes, in corners and fillets are avoided. More generally, control of the coating process and of the coating quality is largely facilitated and may be carried out within smaller layer thickness tolerances.

As such, the benefits of applying the method as lined out above and applying coatings to the individual blanks inhibits numerous potential benefits. On the one hand, due to the superior accessibility, all faces requiring coating can readily be sprayed with coating. A more consistent coating quality may be achieved on each member to be coated. The coating thickness may be better controlled, and in particular a more even coating thickness may be achieved, as there are no large-scale complexly shaped transition areas between a platform and an airfoil. The coating and in particular spraying process may be carried out with enhanced process flexibility. Thus, the process may be better adapted to actual requirements. Further advantages and benefits, whether explicitly mentioned or not, will become apparent in view of the further description.

In more specific embodiments, the method comprises coating an airfoil member blank, wherein at least an airfoil member aerodynamic section is coated. In other specific embodiments the method comprises coating a platform member blank, wherein at least a hot gas side surface of the platform member blank is coated.

According to other aspects, applying the coating step may comprise partially coating the blank while some sections of the blank are left uncoated. More specifically, if the blank comprises an interface section which is configured and adapted to mate with an interface section of a further member when assembled, said interface section may be left uncoated.

It is furthermore known to preheat a blank before applying the coating step. Due to the smaller and lighter components to be preheated, the preheating step may be carried out in a smaller preheating space, or, a larger number of blanks may be preheated in a space of a given size. Moreover, due to the less complex geometry of each piece to be heated, temperature distribution in the workpiece is more evenly. The skilled person will readily appreciate the numerous advantages resulting from more even heating.

In a further aspect of the method as disclosed herein it may comprise coating a joint line of two members after joining them, which comprises in particular coating the joint line at a surface of the resulting assembly which is intended for hot gas exposure.

As implicitly mentioned above, the method may further comprise interlocking at least one airfoil member and one platform member in the blading member assembly.

Further disclosed is a blading member assembly for a fluid flow machine, the blading member assembly comprising at least one airfoil member and at least one platform member, at least one cooling opening being provided on one of the members, an outlet aperture of said cooling opening on the hot gas side of the member defining an envelope, wherein said envelope when extrapolated on the hot gas side interferes with or intersects at least one other member of the blading member assembly.

Still further disclosed is a blading member assembly for a fluid flow machine, the blading member assembly comprising at least one airfoil member and at least one platform member, at least one cooling opening being provided on one of the members, said cooling opening comprising a coolant duct segment having a straight axial extent, wherein an axis of said straight axial extent when extrapolated on the hot gas side of the member interferes with or intersects at least one other member of the blading member assembly.

Providing the blading member assemblies as mentioned above is enabled in applying the method according to the present disclosure. According to the art, it would not be possible to manufacture blading assemblies as disclosed above, as there would be no tooling access to manufacture the cooling openings in the mentioned manner. Due to processing each blank individually, it is possible to manufacture a cooling opening in an airfoil member which is arranged and oriented such that tooling access in an assembled blading member would be restricted by a platform member, or by a further airfoil member in case of a multiple airfoil blading member assembly. Likewise, it would not be possible to manufacture a cooling opening in a platform, wherein the cooling opening would for instance point towards an airfoil or towards a second platform or shroud, as it would simply not be possible to place a tool at the required location and in the required direction. According to the present disclosure, however, such cooling openings may be manufactured, as machining the cooling openings takes place before assembling the blading member, and thus one member would not restrict tooling access for processing another member of the assembly.

While the method and devices herein disclosed may be particularly useful for application to blading members intended for use in the expansion turbine of a gas turbine engine, it will be appreciated that it may also be useful in manufacturing blading members for other fluid flow machines, such as for instance, but not restricted to, steam turbines, compressors, or turbochargers. While in said engines cooling openings may be omitted, they still may require coatings, for instance protective coatings. Such coatings may be applied to airfoil and/or platform member blanks in applying the method as disclosed, and the individual members may subsequently be assembled and/or joined to each other.

It is understood that the features and embodiments disclosed above may be combined with each other. It will further be appreciated that further embodiments are conceivable within the scope of the present disclosure and the claimed subject matter which are obvious and apparent to the skilled person.

### BRIEF DESCRIPTION OF THE DRAWINGS

The subject matter of the present disclosure is now to be explained in more detail by means of selected exemplary embodiments shown in the accompanying drawings. The figures show
- Fig. 1: a blading member, lining out restrictions to a manufacturing method of the art wherein processing of an integral blading member or an assembled blading member assembly is performed;
- Fig. 2: an exemplary embodiment of a blading member assembly;
- Fig. 3: a cooling opening obtainable by the herein disclosed method;
- Fig. 4: a first embodiment of an assembly of individually coated blading and platform members;
- Fig. 5: a second embodiment of an assembly of individually coated blading and platform members and
- Fig. 6: a third embodiment of an assembly of individually coated blading and platform members.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

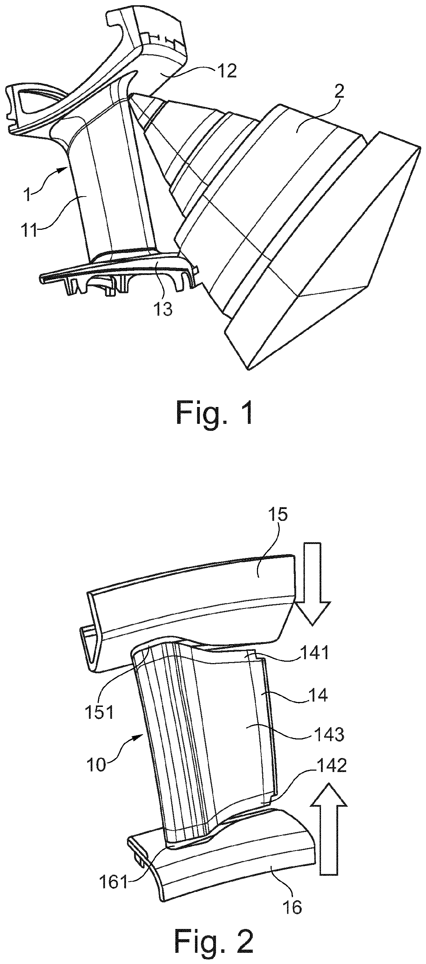

Figure 1 depicts for reference a problem underlying the subject matter of the present disclosure. Shown is a blading member 1, comprising an airfoil 11, a first platform 12, and a second platform 13. As will be readily appreciated, the external surface of the airfoil 11 and the surfaces of the platforms 12, 13 facing the airfoil constitute surfaces which are intended to be exposed to a working gas flow, or, in short, the hot gas side of the blading member 1. In the present depiction, it is shown how a cooling opening is for instance manufactured in airfoil 11. A tool spindle 2 is applied to carry a tool, e.g. a drill, an erosion tool or a laser source, for manufacturing the cooling opening. As is seen, the tool spindle 2, while applied for manufacturing the cooling opening in the airfoil 11, interferes with platform 13. Said interference restricts the ability to manufacture the cooling opening at a required location and that a required angle with respect to the surface of the airfoil 11. Apparently, the same problem may arise when manufacturing cooling openings in any of platform members 12, 13, if, due to the location and direction of the cooling opening, the tool spindle 2 interferes with either one of the airfoil and/or the other platform. As a result, it may be necessary to deviate from a desired cooling opening arrangement in view of said manufacturing restrictions.

The same issue may arise when manufacturing a cooling opening in an assembled blading member assembly.

According to the present disclosure, a blading member assembly, wherein at least one airfoil member and one platform member are joined, is proposed instead of an integral blading member as shown in figure 1. An exemplary embodiment of a blading member assembly is shown in figure 2. The exemplary blading member assembly 10 comprises an airfoil member 14 and two platform members 15 and 16. These members are provided as individual members. Airfoil member 14 comprises an aerodynamic section 143 and two mating sections 141 and 142 provided at longitudinal ends thereof. Platform member 15 comprises a receiver opening 151 which is provided and adapted to receive airfoil member mating section 141. Platform member 16 comprises a receiver opening 161 provided and adapted to receive airfoil member mating section 142. The airfoil member 14 and the two platform members 15 and 16 may be assembled along the direction depicted by arrows. The receiver openings provided in the platform members will receive the respective airfoil member mating sections. Subsequently, the members may be interlocked with the respective mating member, and thus a blading member assembly is formed.

In accordance with the present disclosure, blanks for the members 14, 15, and 16 are provided, for instance by casting those members or by any other suitable primary forming method. Subsequently, the blanks are processed by machining and by applying a coating, and the thus received members will be assembled in the manner depicted in figure 2. As will be appreciated, in processing the individual members 14, 15 and 16, or the blanks thereof, before assembling the blading member assembly, a restriction as shown in connection with figure 1 does not apply. The flexibility in processing the individual members is thus significantly higher than in processing an integral blading member or an already assembled blading member assembly.

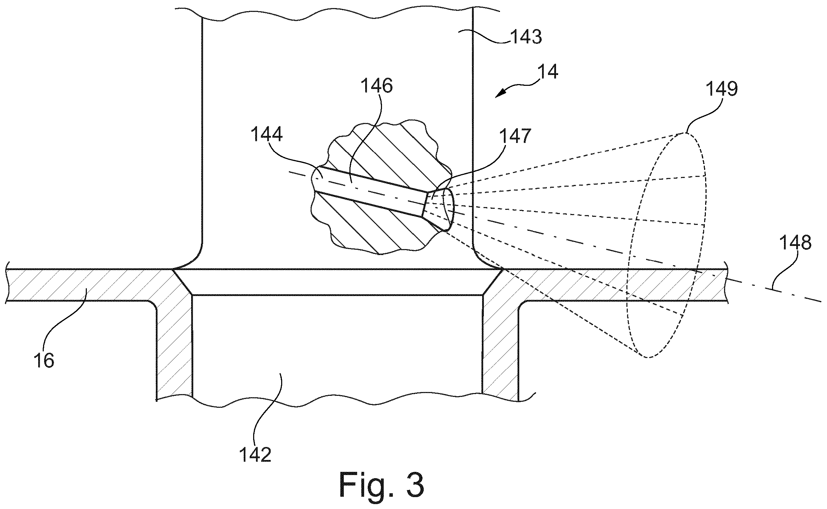

With reference to figure 3 an embodiment of a blading member which is not obtained by means of the herein described method is schematically shown. An airfoil member 14 comprises an airfoil member aerodynamic section 143 and a mating section 142. The mating section 142 is received within a receiver opening of platform member 16. The airfoil member may comprise a multitude of cooling openings . Cooling hole 144 is exemplarily shown in figure 3 as one embodiment of a cooling opening. Cooling hole 144 comprises a straight coolant duct section 146 with axis 148. Cooling hole 144 further comprises a fan-shaped or otherwise generally contoured, outlet aperture 147 on the hot gas side, or outer surface, respectively, of airfoil member 14. Contoured outlet aperture 147 is shaped with an envelope 149, which is comprised by all lines spanning the outlet aperture at the surface of the airfoil member aerodynamic section 143. Contoured outlet aperture 147 may typically be manufactured by milling, eroding, or the like, which requires access tangent to the outlet aperture surface at the airfoil member outer surface. It will be appreciated, that manufacturing this cooling hole requires access along the extrapolated axis 148 or along the outer surface of envelope 149. The axis 148 of the cooling hole straight duct section 146 as well as the envelope of the contoured outlet aperture intersect or interfere with platform 16 when extrapolated on the hot gas side of the airfoil member 14. It is apparent, that this cooling hole could not be manufactured when providing an integral blading member or an assembled blading member assembly as shown in figure 1, as platform 16 will prevent the required tooling access to cooling hole 144. In multi-airfoil arrangements additional airfoils may moreover provide additional obstacles for tooling access. Similar cooling holes may be provided on the platform member, with a similar geometry, and similar limitations as to the tooling access may apply, wherein tooling access may in particular be blocked by an airfoil or a further platform. Now, in applying the teaching of the present disclosure, an airfoil member 14 and a platform member 16 are provided as separate members. In providing the airfoil member 14, firstly the airfoil member blank is provided, wherein the cooling holes are machined before assembling the blading member from the airfoil member 14 and the platform member 16. It is apparent from the depiction in figure 3 that, when only airfoil member 14 is considered, tooling access to cooling hole 144 is enabled, and in particular, a drill can be applied along axis 148 to drill straight section 146 of cooling hole 144. Also, tooling access is possible within and along envelope 149, which enables manufacturing contoured outlet aperture 147 of the cooling hole. It should be noted, that in practice some additional free space needs to be provided around envelope 149 as well as axis 148, such as to provide sufficient space for the tool or the tool spindle, respectively, while manufacturing the cooling hole. Moreover, cooling openings may or may not be present in the platform member. Further, a coating, such as for instance a thermal barrier coating and/or any other appropriate protective coating, may be applied to the airfoil member 14 and/or the platform member 16.

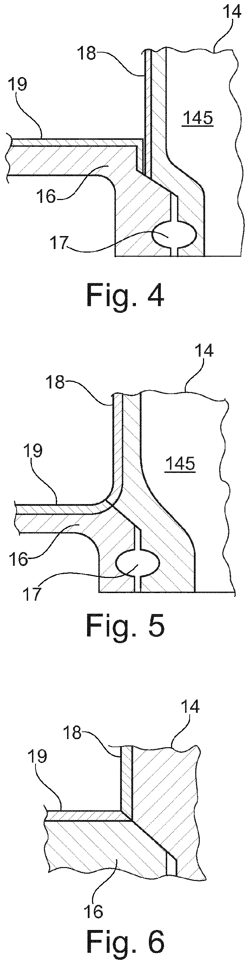

Figure 4 shows an embodiment of the blading member wherein the method described herein has been applied, comprising a coating step of the airfoil member 14 and the platform member 16. An airfoil internal cooling duct 145 is schematically indicated within airfoil member 14. It should be noted, that typically much more complex cooling schemes may be present in an airfoil, but this generally has no influence on the subject matter of the present disclosure. Thus, the cooling duct 145 is only shown schematically as a cavity inside airfoil member 14, and all details have been omitted. In particular, cooling openings similar to those shown in connection with figure 3 may be present, but have been omitted in the present depiction. Airfoil member 14 is provided with an airfoil coating layer 18. Platform member 16 is provided with a platform member coating layer 19. The blading member assembly shown in figure 4 has been provided in firstly providing an airfoil member blank and a platform member blank, and subsequently applying the coating to the airfoil member and the platform member individually. To the extent cooling openings are provided, those may in beneficial embodiments also be manufactured on the airfoil member and/or the platform member individually before assembling. Thus, airfoil coating layer 18 and platform coating layer 19 are distinct from each other. This allows to selectively apply the coating to all areas of the respective blanks individually and without restrictions provided by the presence of the respective other member, thus obtaining the coated airfoil member and the coated platform member. A common interlock cavity 17 is provided at an interface between the airfoil member and the platform member. Interlock cavity 17 may subsequently be filled for instance in applying a method like bi-cast or injection molding, thus providing for an interlock between the airfoil member and the platform member.

Further exemplary configurations of blading members which are assembled from individually coated airfoil members 14 and platform members 16 are shown in figures 5 and 6. In some embodiments it may be found beneficial to machine the coating interfaces prior to assembly.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### LIST OF REFERENCE NUMERALS

- 1: blading member
- 2: tool spindle
- 10: blading member assembly
- 11: airfoil
- 12: platform
- 13: platform
- 14: airfoil member
- 15: platform member
- 16: platform member
- 17: common interlock cavity
- 18: airfoil coating layer
- 19: platform coating layer
- 141: airfoil member mating section
- 142: airfoil member mating section
- 143: airfoil member aerodynamic section
- 144: cooling opening or cooling hole
- 145: airfoil internal cooling duct
- 146: cooling hole straight section
- 147: cooling hole outlet aperture
- 148: axis of cooling hole straight section
- 149: envelope of cooling hole outlet aperture
- 151: platform member receiver opening
- 161: platform member receiver opening

## Claims

1. A method for manufacturing a blading member assembly (10) for a fluid flow machine, wherein the blading member assembly (10) comprises at least one airfoil member (14) and one platform member (15, 16), the method comprising
manufacturing a platform member blank,
manufacturing an airfoil member blank,
processing at least one of said blanks thus obtaining the at least one airfoil member (14) and at least one platform member (15, 16),
and subsequently joining the at least one platform member (15, 16) and the at least one airfoil member (14), thus providing the blading member assembly (10);
the method being **characterized in that** processing a blank comprises applying at least one coating step to the blank before assembling the blading member assembly.

2. The method according to any of the preceding claims, **characterized in that** processing a blank comprises applying at least one machining step.

3. The method according to the preceding claim, **characterized in that** machining comprises drilling.

4. The method according to the preceding claim, **characterized in that** drilling comprises drilling coolant ducts (146) for a cooling opening (144).

5. The method according to any of claims 2 through 4, **characterized in that** machining comprises machining an outlet aperture (147) of at least one cooling opening (144).

6. The method according to any of claims 2 through 5, wherein the blank comprises an interface section (141, 142, 151, 161) which is configured and adapted to mate with an interface section of a further member when assembled, **characterized in** machining the interface section.

7. The method according to the preceding claim, **characterized in that** the method comprises applying at least one of a milling or eroding step to the interface section.

8. The method according to any of the preceding claims, **characterized in that** the coating step comprises applying at least one of a protective coating and/or a thermal barrier coating.

9. The method according to any of claims any of the preceding claims,
wherein the method comprises coating an airfoil member blank, **characterized in that** at least an airfoil member aerodynamic section (143) is coated.

10. The method according to any of the preceding claims, wherein the method comprises coating a platform member blank, **characterized in that** at least a hot gas side surface of the platform member blank is coated.

11. The method according to any of the preceding claims, **characterized in that** applying the coating step comprises partially coating the blank while some sections of the blank are left uncoated.

12. The method according to the preceding claim, **characterized in that** the blank comprises an interface section which is configured and adapted to mate with an interface section of a further member when assembled, and **in that** the interface section is left uncoated.

## Patentansprüche

1. Verfahren zur Herstellung einer Beschaufelungselement-Anordnung (10) für eine Fluidströmungsmaschine, wobei die Beschaufelungselement-Anordnung (10) wenigstens ein Profilelement (14) und ein Plattformelement (15, 16) umfasst, wobei das Verfahren umfasst:
Herstellen eines Plattformelement-Rohlings,
Herstellen eines Profilelement-Rohlings,
Bearbeiten wenigstens eines der Rohlinge, um somit das wenigstens eine Profilelement (14) und das wenigstens ein Plattformelement (15, 16) zu erhalten,
und anschließendes Zusammenfügen des wenigstens einen Plattformelements (15, 16) und des wenigstens einen Profilelements (14), um somit die Beschaufelungselement-Anordnung (10) zu bilden;
wobei das Verfahren **dadurch gekennzeichnet ist, dass** die Bearbeitung eines Rohlings ein Anwenden von wenigstens einem Beschichtungsschritt auf den Rohling vor dem Zusammenfügen der Beschaufelungselement-Anordnung umfasst.

2. Verfahren nach dem vorangehenden Anspruch, **dadurch gekennzeichnet, dass** die Bearbeitung eines Rohlings ein Anwenden wenigstens eines Bearbeitungsschrittes umfasst.

3. Verfahren nach einem der vorangehenden Ansprüche, **dadurch gekennzeichnet, dass** das Bearbeiten ein Bohren umfasst.

4. Verfahren nach einem der vorangehenden Ansprüche, **dadurch gekennzeichnet, dass** das Bohren ein Bohren von Kühlmittelkanälen (146) für eine Kühlöffnung (144) umfasst.

5. Verfahren nach einem der Ansprüche 2 bis 4, **dadurch gekennzeichnet, dass** das Bearbeiten ein Bearbeiten einer Auslassmündung (147) von wenigstens einer Kühlöffnung (144) umfasst.

6. Verfahren nach einem der Ansprüche 2 bis 5, wobei der Rohling einen Kontaktflächenabschnitt (141, 142, 151, 161) aufweist, der dafür konfiguriert und angepasst ist, nach dem Zusammenfügen mit einem Kontaktflächenabschnitt eines weiteren Elements zusammenzupassen, **gekennzeichnet durch** ein Bearbeiten des Kontaktflächenabschnitts.

7. Verfahren nach dem vorangehenden Anspruch, **dadurch gekennzeichnet, dass** das Verfahren das Anwenden von wenigstens einem Fräs- oder Erodierschritt auf den Kontaktflächenabschnitt umfasst.

8. Verfahren nach einem der vorangehenden Ansprüche, **dadurch gekennzeichnet, dass** der Beschichtungsschritt ein Aufbringen einer Schutzbeschichtung und/oder einer Wärmedämmbeschichtung umfasst.

9. Verfahren nach einem der vorangehenden Ansprüche, wobei das Verfahren ein Beschichten eines Profilelement-Rohlings umfasst, **dadurch gekennzeichnet, dass** wenigstens ein aerodynamischer Abschnitt (143) des Profilelements beschichtet wird.

10. Verfahren nach einem der vorangehenden Ansprüche, wobei das Verfahren ein Beschichten eines Plattformelement-Rohlings umfasst, **dadurch gekennzeichnet, dass** wenigstens eine heißgasseitige Oberfläche des Plattformelement-Rohlings beschichtet wird.

11. Verfahren nach einem der vorangehenden Ansprüche, **dadurch gekennzeichnet, dass** das Anwenden des Beschichtungsschritts ein teilweises Beschichten des Rohlings umfasst, während einige Abschnitte des Rohlings unbeschichtet bleiben.

12. Verfahren nach einem der vorangehenden Ansprüche, **dadurch gekennzeichnet, dass** der Rohling einen Kontaktflächenabschnitt aufweist, der dafür konfiguriert und angepasst ist, nach dem Zusammenfügen mit einem Kontaktflächenabschnitt eines weiteren Elements zusammenzupassen, und dass der Kontaktflächenabschnitt unbeschichtet bleibt.

## Revendications

1. Procédé de fabrication d'un ensemble d'éléments d'aubage (10) d'une machine à écoulement de fluide, dans lequel l'ensemble d'éléments d'aubage (10) comprend au moins un élément de profil aérodynamique (14) et un élément de plate-forme (15, 16), le procédé comprenant:
la fabrication d'une pièce brute d'élément de plate-forme,
la fabrication d'une pièce brute d'élément de profil aérodynamique,
le traitement d'une au moins desdites pièce brutes en obtenant de ce fait l'au moins un élément de profil aérodynamique (14), et l'au moins un élément de plate-forme (15, 16), et joindre ultérieurement l'au moins un élément de plate-forme (15, 16) et l'au moins un élément de profil aérodynamique (14), en fournissant de ce fait l'ensemble d'éléments d'aubage (10) ;
le procédé étant **caractérisée en ce que** le traitement d'une pièce brute comprend l'application d'au moins une étape de revêtement sur la pièce brute avant d'assembler l'ensemble d'éléments d'aubage.

2. Procédé selon la revendication précédente, **caractérisé en ce que** le traitement d'une pièce brute comprend l'application d'au moins une étape d'usinage.

3. Procédé selon la revendication précédente, **caractérisé en ce que** l'usinage comprend un perçage.

4. Procédé selon la revendication précédente, **caractérisé en ce que** le perçage comprend le perçage de canalisations de fluide frigorigène (146) pour une ouverture de refroidissement (144).

5. Procédé selon l'une quelconque des revendications 2 à 4, **caractérisé en ce que** l'usinage comprend l'usinage d'une ouverture de sortie (147) d'une ouverture de refroidissement (144) au moins.

6. Procédé selon l'une quelconque des revendications 2 à 5, dans lequel la pièce brute comprend une section interface (141, 142, 151, 161) qui est configurée et adaptée pour s'accoupler à une section interface d'un autre élément une fois assemblée, **caractérisé par** l'usinage de la section interface.

7. Procédé selon la revendication précédente, **caractérisée en ce que** le procédé comprend l'application de l'une au moins d'une étape de fraisage ou d'une étape d'érosion de la section interface.

8. Procédé selon l'une quelconque des revendications précédentes, **caractérisé en ce que** l'étape de revêtement comprend l'application de l'un au moins d'un revêtement de protection et / ou d'un revêtement de barrière thermique.

9. Procédé selon l'une quelconque des revendications précédentes,
dans lequel le procédé comprend une étape consistant à revêtir une pièce brute d'élément de profil aérodynamique,
**caractérisé en ce qu'**une section aérodynamique d'élément de profil aérodynamique (143) au moins, est revêtue.

10. Procédé selon l'une quelconque des revendications précédentes, dans lequel le procédé comprend le revêtement d'une pièce brute d'élément de plate-forme, **caractérisé en ce qu'**au moins une surface du côté gaz chauds de la pièce brute d'élément de plate-forme, est revêtue.

11. Procédé selon l'une quelconque des revendications précédentes, **caractérisé en ce que** l'application de l'étape de revêtement comprend un revêtement partiel de la pièce brute, tandis que certaines sections de la pièce brute sont laissées non revêtues.

12. Procédé selon la revendication précédente, **caractérisé en ce que** la pièce brute comprend une section interface qui est configurée et adaptée pour s'accoupler à une section interface d'un autre élément une fois assemblée, et **en ce que** la section interface est laissée non revêtue.
